# EUROPÄISCHE PATENTANMELDUNG

(11) **EP 1 690 579 A1**
(43) Veröffentlichungstag der Anmeldung: **16.08.2006**
(21) Anmeldenummer: 05003100.4
(22) Anmeldetag: 14.02.2005
(51) Int. Cl.: B01D 35/10, B01D 29/70

(54) **Filteranordnung und Verfahren zum Filtrieren von Schmutzwasser, insbesondere bei der Trinkwasseraufbereitung**

(71) Anmelder: Kärcher Futuretech GmbH, 71364 Winnenden (DE)
(72) Erfinder: Siemer, Andreas, Dr., 71573 Allmersbach im Tal (DE); Maier, Norbert, 71554 Weissach im Tal (DE)
(74) Vertreter: Duhme, Torsten

(57) **Zusammenfassung**

Eine Filteranordnung zum Filtrieren von Schmutzwasser beinhaltet ein Filtermodul (12) mit einem ersten und einem zweiten Halter (40, 42). Zwischen den Haltern erstreckt sich ein Innenrohr (38) mit einem Filtratausgang (36) und einer Längsachse (43). Außerdem sind zwischen dem ersten und dem zweiten Halter (40, 42) eine Vielzahl von Filamentfasern (44) angeordnet, die außerhalb des Innenrohrs (38) verlaufen. Der erste und der zweite Halter (40, 42) sind gegeneinander um die Längsachse (43) herum verdrehbar. Gemäß einem Aspekt der Erfindung sind der erste und der zweite Halter (40, 42) in einem festen Abstand (D) zueinander festgelegt, so dass sich die Filamentfasern (44) bei zunehmender Verdrehung zunehmend fester um das Innenrohr (38) legen, um ein Filtrationsmedium zu bilden.

## Beschreibung

Die vorliegende Erfindung betrifft eine Filteranordnung zum Filtrieren von Schmutzwasser, insbesondere aber nicht ausschließlich zur Trinkwasseraufbereitung, mit zumindest einem Filtermodul zum Filtrieren von Schmutzwasser, wobei das Filtermodul einen ersten und einen zweiten Halter aufweist, zwischen denen sich ein Innenrohr mit einem Filtratausgang und einer Längsachse erstreckt, wobei zwischen dem ersten und dem zweiten Halter eine Vielzahl von Filamentfasern angeordnet sind, die außerhalb des Innenrohrs verlaufen, und wobei der erste und der zweite Halter gegeneinander um die Längsachse herum verdrehbar sind.

Die Erfindung betrifft ferner ein Verfahren zum Filtrieren von Schmutzwasser, mit den Schritten:
- Bereitstellen von zumindest einem Filtermodul zum Filtrieren von Schmutzwasser, wobei das Filtermodul einen ersten und einen zweiten Halter aufweist, zwischen denen sich ein Innenrohr mit einem Filtratausgang und einer Längsachse erstreckt und zwischen denen eine Vielzahl von Filamentfasern angeordnet sind, die außerhalb des Innenrohrs verlaufen, und
- Verdrehen des ersten und zweiten Halters gegeneinander um die Längsachse herum.

Eine solche Filteranordnung und ein solches Verfahren sind aus US 5,174,907 bekannt.

Die Erfindung betrifft insbesondere aber nicht ausschließlich eine Filteranordnung und ein Verfahren, die sich zur Vorreinigung von Oberflächenwasser, wie etwa Wasser aus Flüssen, Seen oder Meeren, bei einer mobilen Trinkwasseraufbereitungsanlage eignen. So sollen die neue Filteranordnung und das neue Verfahren vor allem bei mobilen Einsätzen verwendet werden können, sei es bei militärischen Übungen oder Einsätzen von größeren Truppenverbänden oder bei der Katastrophenhilfe, beispielsweise nach einem Erdbeben oder einer Überschwemmung. Die neue Filteranordnung und das entsprechende Verfahren müssen daher einfach und robust sein und eine zeitlich andauernde Filtrierung von Schmutzwasser mit einem geringen Wartungsaufwand ermöglichen. Außerdem sollen die neue Filteranordnung und das neue Verfahren für den mobilen Einsatz geeignet sein, das heißt die Filteranordnung darf nicht zu groß und zu schwer sein. Andererseits müssen die neue Filteranordnung und das neue Verfahren eine zuverlässige und reproduzierbare Filtration von unterschiedlichen Schmutzwässern ermöglichen, so dass mit dem Filtrat eine Umkehrosmoseanlage zur Trinkwasseraufbereitung gespeist werden kann.

Aus der eingangs genannten US 5,174,907 ist eine Filteranordnung bekannt, die vor allem zur Trennung von Rohöl und Wasser sowie zur Aufreinigung von ölverschmutztem Wasser vorgesehen ist, welches beispielsweise bei der Weiterverarbeitung von Öl in Raffinerien anfällt. Die bekannte Filteranordnung besitzt ein zylindrisches Innenrohr mit einem perforierten Mantel, der von einer Vielzahl von Filamentfasern umgeben ist. An den beiden Enden des Innenrohrs sind Halter angeordnet, an denen die Filamentfasern befestigt sind. Die Halter sind in Axialrichtung des Innenrohrs verstellbar. Zum Filtrieren werden die beiden Halter zusammengeschoben. Dementsprechend werden auch die Filamentfasern zusammengeschoben bzw. komprimiert und es entsteht durch die Überlagerung der zusammengeschobenen Fasern ein feinmaschiges Netz. Das Netz der Filamentfasern bildet das Filtrationsmedium, das von dem Schmutzwasser durchströmt wird. Zum Reinigen der Filteranordnung werden die beiden Halter in entgegengesetzter Richtung auseinandergezogen, wodurch die Fasern gestreckt und gedehnt werden. In diesem Zustand ist das "Netzwerk" der Fasern geöffnet und die Fasern können mit einer Reinigungsflüssigkeit gespült werden. Um das Netz der komprimierten Fasern gleichmäßiger zu machen, schlägt die US 5,174,907 vor, zusätzlich zu der Kompressionsbewegung auch noch eine Drehbewegung auszuüben, mit der die Fasern um das Innenrohr verdreht werden. Als Filtrationsmedium dient jedoch weiterhin das Netzwerk der zusammengeschobenen Fasern.

Aus US 5,984,108 ist eine weitere Filteranordnung bekannt, bei der das Filtrationsmedium von einer Vielzahl von Filamentfasern gebildet wird, die zusammengeschoben werden, um ein Netz aus Filamentfasern zu bilden. Zum Reinigen des Filters werden die Fasern ebenfalls gestreckt. Eine vom Prinzip ähnliche Filteranordnung ist ferner aus US 1,991,847 bekannt.

Aus DE 27 45 526 A1 ist eine Filteranordnung zur Filtration von radioaktiven oder biologisch kontaminierten Gasen, Dämpfen oder Flüssigkeiten bekannt, bei der eine Vielzahl von Fasern an einer gelochten Unterlage befestigt sind. Die Fasern werden während der Filtration durch die Strömung des zu filtrierenden Mediums zusammengepresst. Nach erfolgter Filtration werden die Fasern in Gegenrichtung durchspült, wobei sie sich aufgrund der umgekehrten Strömungsrichtung aufrichten.

Bei allen bekannten Filteranordnungen dient als Filtrationsmedium also ein Netzwerk aus zusammengeschobenen Filamentfasern. Die "Maschen- oder Porengröße" dieses Netzwerkes ist in gewissem Maß zufallsbedingt, je nachdem wie sich die Fasern beim Zusammenschieben auf- bzw. aneinander anlegen. Die bekannten Filteranordnungen mögen für die jeweils angegebenen Verwendungszwecke gute Dienste leisten. Für eine Vorreinigung im Rahmen der Trinkwasseraufbereitung sind sie jedoch nicht optimal.

Aus US 3,931,019 ist eine sogenannte Koaleszenzzelle bekannt, die ebenfalls zum Trennen von Öl und Wasser dient. Die Trennung erfolgt durch Koaleszenz der in Wasser dispergierten Öltröpfchen, während das verschmutzte Wasser durch mehrere Schichten eines zylinderförmigen Körpers läuft. Abgesehen davon, dass es sich bei dieser Zelle nicht um ein Filter im herkömmlichen Sinne handelt, besitzt eine solche Anordnung den Nachteil, dass die Reinigung der vom Schmutzwasser durchströmten Schichten sehr aufwändig ist, wenn sie überhaupt möglich ist.

Vor diesem Hintergrund ist es eine Aufgabe der vorliegenden Erfindung, eine einfache und robuste Filteranordnung anzugeben, die eine reproduzierbare Filtrierung von Schmutzwasser mit geringem Wartungsaufwand ermöglicht. Es ist ferner eine Aufgabe der Erfindung, ein entsprechendes Verfahren anzugeben.

Diese Aufgabe wird gemäß einem ersten Aspekt der Erfindung durch eine Filteranordnung der eingangs genannten Art gelöst, bei der der erste und der zweite Halter in einem festen Abstand zueinander festgelegt sind, so dass sich die Filamentfasern bei zunehmender Verdrehung zunehmend fester um das Innenrohr legen.

Die Aufgabe wird gemäß einem weiteren Aspekt der Erfindung durch ein Verfahren der eingangs genannten Art gelöst, bei dem der erste und der zweite Halter in einem festen Abstand zueinander eingespannt werden, so dass sich die Filamentfasern bei zunehmender Verdrehung zunehmend fester um das Innenrohr legen.

Die Erfindung basiert damit auf der Idee, ein Filtrationsmedium aus einer Vielzahl von Fasern zu bilden, die um eine Längsachse herum gegeneinander verdreht werden. Betrachtet man die Vielzahl der Fasern als eine Gesamtheit, erfährt diese Gesamtheit also eine Torsion. Anders ausgedrückt wird die Vielzahl der Fasern durch die Drehbewegung um die Längsachse herum miteinander verdrillt. Je stärker man die Fasern verdrillt, das heißt mit zunehmendendem Verdrehungswinkel, desto stärker werden die an ihren Enden festgelegten Fasern gegeneinander gepresst. Die Fasern legen sich dabei in einer weitgehend determinierten, reproduzierbaren Weise aneinander. Erst durch die Verdrehung wird also aus den Fasern ein Filtrationsmedium gebildet. Aufgrund der determinierten Bewegung kann die "Porengröße" der verbleibenden Durchgänge reproduzierbar eingestellt werden. Damit bietet die vorliegende Erfindung ein Filtrationsmedium mit einer einstellbaren Filtrationsqualität in Bezug auf die Teilchengröße der auszufilternden Teilchen.

Die neue Filteranordnung und das neue Verfahren haben sich als sehr effektiv erwiesen, um Oberflächenwasser verschiedener Herkunft in reproduzierbarer Art und Weise so vorzufiltern, dass aus dem Filtrat in einer anschließenden Aufbereitung (Umkehrosmoseanlage) Trinkwasser erzeugt werden kann. Darüber hinaus kann das Filtrationsmedium, das heißt die Vielzahl der Filamentfasern, sehr einfach durch Rückspülen gereinigt werden, wenn man den Verdrehwinkel wieder rückgängig macht, das heißt die Fasern durch Rückdrehen entspannt. Es hat sich gezeigt, dass auf diese Weise sehr viele Filtrationszyklen mit ein und demselben Filtermodul möglich sind.

Die neue Filteranordnung ist technisch recht einfach zu realisieren und sie benötigt lediglich einen Drehantrieb, mit dem die Fasern um die Längsachse herum verdreht bzw. verdrillt werden. Ein solcher Drehantrieb lässt sich technisch sehr robust ausführen. Die gesamte Filteranordnung kann daher kostengünstig hergestellt und mit geringem Wartungsaufwand betrieben werden. Darüber hinaus kann die neue Filteranordnung sehr kleinbauend realisiert werden, so dass sie für einen mobilen Betrieb, auch unter schwierigen Bedingungen, gut geeignet ist. Die neue Filteranordnung besitzt im Vergleich zu bekannten Anordnungen mit gleichen Außenabmessungen eine um 20% bis hin zu 300% größere effektive Filterfläche. Außerdem benötigt sie keinen großen Ersatzteilvorrat, da das Filtermodul nach dem Entspannen sehr gut durchspült und gereinigt werden kann. Insgesamt ist die neue Filteranordnung damit eine sehr kostengünstige Lösung für Einsätze unter schwierigen Bedingungen, wie sie beispielsweise in einem Katastrophengebiet vorherrschen. Darüber hinaus kann die neue Filteranordnung natürlich trotzdem auch in stationären Anlagen verwendet werden, wobei man auch in diesem Fall von den Vorteilen der einstellbaren Filtrationsqualität, dem geringen Platzbedarf und der guten Rückspülbarkeit profitiert.

Die genannte Aufgabe ist daher vollständig gelöst.

In einer Ausgestaltung der Erfindung weisen die Vielzahl der Filamentfasern eine Länge auf, die größer ist als der feste Abstand. In einer bevorzugten Ausgestaltung sind die einzelnen Fasern etwa 5 % bis 25 % länger als der feste Abstand.

Alternativ hierzu wäre es grundsätzlich möglich, die Länge der einzelnen Fasern in etwa gleich dem festen Abstand zu wählen. Die bevorzugte Ausgestaltung mit einem erkennbar größeren Abstand führt jedoch zu einer besseren Reinigung des Filtermoduls im entspannten Zustand, da sich die Fasern aufgrund ihrer "Überlänge" zwischen den Haltern bewegen können. Die Fasern "wehen" im entspannten Zustand gewissermaßen in der Strömung.

Durch diese Bewegung werden festgesetzte Schmutzpartikel leichter gelöst und fortgespült. Darüber hinaus wird die Spannung und damit die "Porengröße" des Filtrationsmediums in dieser Ausgestaltung allein durch das Verdrehen erreicht. Die Filtrationsqualität lässt sich damit über einen großen Variationsbereich hinweg reproduzierbar einstellen. Die angegebenen Größenordnungen für die Faserlänge haben sich als besonders vorteilhaft erwiesen, um eine gute Filterwirkung schon bei geringen Drehwinkeln zu erreichen.

In einer weiteren Ausgestaltung sind die Filamentfasern mit dem ersten und dem zweiten Halter unlösbar verbunden.

Diese Ausgestaltung gewährleistet eine noch besser reproduzierbare und zuverlässigere Filtration, da "Löcher" im Filtrationsmedium aufgrund von gelösten Fasern vermieden werden. Die Lebensdauer des Filtermoduls ist höher.

In einer weiteren Ausgestaltung ist eine erste starre und eine zweite drehbare Aufnahme vorgesehen, in die der erste und der zweite Halter lösbar eingesetzt werden bzw. eingesetzt sind. Vorzugsweise sitzen der erste und der zweite Halter formschlüssig in den beiden Aufnahmen. Alternativ hierzu kann es sich jedoch auch um eine reibschlüssige Verbindung handeln.

Diese Ausgestaltung ermöglicht den einfachen Austausch des Filtermoduls, wenn die Fasern beschädigt sind oder sich trotz aller Vorkehrungen nicht mehr hinreichend reinigen lassen. Darüber hinaus bietet diese Ausgestaltung den Vorteil, dass wechselweise verschiedene Arten von Fasern eingesetzt werden können, wodurch sich die Filtrationsqualität ebenfalls variieren lässt. Der Aufwand beim Austausch der Fasern ist in dieser Ausgestaltung sehr gering.

In einer weiteren Ausgestaltung ist die erste Aufnahme lösbar in der Filteranordnung befestigt, während die zweite Aufnahme fest mit einem Drehantrieb verbunden ist.

Diese Ausgestaltung ermöglicht einen besonders einfachen Austausch eines Filtermoduls, da lediglich die erste Aufnahme gelöst oder geöffnet werden muss. Der Drehantrieb und der Antriebsstrang zum Übertragen der Drehbewegung auf die Fasern sind von dem Austausch des Filtermoduls nicht betroffen. Leckagen aufgrund von wiederholt geöffneten Dichtungen im Bereich des Drehantriebes werden dadurch besser vermieden.

In einer weiteren Ausgestaltung beinhalten die Filamentfasern Aktivkohle.

Diese Ausgestaltung bietet neben der reinen Trübstoffausfilterung auch schon eine chemische Vorreinigung des Filtrats. Besonders vorteilhaft ist dies, wenn militärisch oder anderweitig kontaminiertes Oberflächenwasser zu Trinkwasser aufbereitet werden soll.

In einer weiteren Ausgestaltung ist ein Satz von Filtermodulen vorgesehen, die Filamentfasern mit unterschiedlichen Eigenschaften aufweisen. Insbesondere sind die Filamentfasern ausgewählt aus einer Gruppe mit Fasern der Eigenschaften dick/flauschig, dünn/flauschig, dick/kompakt und dünn/kompakt.

Mit dieser Ausgestaltung lässt sich die neue Filteranordnung sehr variabel auf unterschiedliche Filtrationsqualitäten und unterschiedliche Arten von Schmutzwasser einstellen. Je nach gewählter Faserart ist die Porengröße des Filtrationsmediums (bei annähernd gleicher Verdrehung) unterschiedlich. Zudem haften verschiedene Arten von Schmutzteilchen unterschiedlich gut an kompakten, flauschigen, glatten, rauen, dünnen, dicken und anderweitig unterschiedlichen Fasern.

In einer weiteren Ausgestaltung wird das zumindest eine Filtermodul zum Reinigen mit Schmutzwasser gespült oder rückgespült. Bevorzugt sind die Fasern dabei entspannt (zurückgedreht). Dementsprechend ist bevorzugt eine Ventilanordnung vorgesehen, die dazu ausgebildet ist, das Filtermodul mit Schmutzwasser zu durchspülen, und zwar vorzugsweise im entspannten Zustand und in umgekehrter Flussrichtung.

Diese Ausgestaltungen tragen zu einem geringen Wartungsaufwand und zu einem kleinen, robusten Aufbau der neuen Filteranordnung bei. Das Reinigen des Filtermoduls mit Schmutzwasser ermöglicht es, auf einen Tank oder ein Reservoir zu verzichten, in dem andernfalls Filtrat zum Spülen des Filtermoduls gesammelt werden müsste. Die Ausgestaltungen profitieren somit von der Erkenntnis, dass eine hinreichende Reinigung des Filtermoduls auch mit Schmutzwasser zu erreichen ist, und zwar auch dann, wenn der Einsatz des neuen Filtermoduls zur Vorreinigung bei der Trinkwasseraufbereitung dient. Ein Rückspülen in umgekehrter Flussrichtung ist bevorzugt, weil dies eine bessere Reinigung des Filtermoduls möglich macht.

Konstruktiv ist die Ventilanordnung der neuen Filteranordnung vorzugsweise so ausgebildet, dass beide Anschlüsse des Filtermoduls mit einer Schmutzwasserquelle verbindbar sind und dass die Ansaugrichtung umkehrbar ist. Eine solche Ausgestaltung besitzt auch noch den Vorteil, dass auch beim Einfiltrieren, das heißt bei der (erneuten) Inbetriebnahme eines Filtermoduls, Filtrat zunächst der Schmutzwasserquelle zugeleitet werden kann.

In einer weiteren Ausgestaltung ist die Ventilanordnung dazu ausgebildet, das Filtermodul druckluftfrei mit Schmutzwasser zu durchspülen.

Auch diese Ausgestaltung trägt zu einer besonders einfachen, leichten, wartungsarmen und robusten Realisierung bei, die sich vor allem für Einsätze in Katastrophenfällen und unter schwierigen Bedingungen eignen.

In einer weiteren Ausgestaltung ist eine Steuereinheit vorgesehen, die dazu ausgebildet ist, die relative Verdrehung des ersten und zweiten Halters in Abhängigkeit von einer Spülrichtung und/oder in Abhängigkeit von der gewünschten Filtrationsqualität einzustellen. Verfahrenstechnisch ist es dabei bevorzugt, wenn der erste und der zweite Halter um einen Drehwinkel gegeneinander verdreht werden, der in Abhängigkeit von einer gewünschten Filtrationsqualität eingestellt wird.

Diese Ausgestaltung macht von den Möglichkeiten der neuen Filteranordnung bzw. des neuen Verfahrens vorteilhaften Gebrauch, indem die Verdrehung der Fasern in Abhängigkeit von der gewünschten Funktion gewählt wird. Zum Reinigen des Filtermoduls wird die Verdrehung vorzugsweise vollständig aufgehoben, so dass sich die Fasern beim Durchspülen frei bewegen können. Die Reinigungswirkung ist hierbei besonders gut. Beim Filtrieren lässt sich die Porengröße des Filtrationsmediums durch die Stärke der Verdrehung (Größe des Verdrehwinkels) beeinflussen. Diese Ausgestaltung ist daher besonders variabel, und sie ermöglicht eine vorteilhafte Anpassung der Funktionsweise an unterschiedliche Umgebungsbedingungen, wie zum Beispiel unterschiedlich stark verunreinigtes Schmutzwasser.

In einer weiteren Ausgestaltung ist eine Vielzahl von Filtermodulen vorgesehen, die parallel zueinander angeordnet sind und die unabhängig voneinander mit Schmutzwasser durchspülbar sind. Verfahrenstechnisch ist es dabei bevorzugt, wenn die Vielzahl der Filtermodule zeitlich versetzt zueinander zur Reinigung durchspült werden.

Diese Ausgestaltung ermöglicht eine skalierbare Filtrationsleistung sowie einen kontinuierlichen, ununterbrochenen Filtrationsbetrieb. Infolgedessen kann auf einen Tank oder ein Reservoir zum Zwischenspeichern von Filtrat verzichtet werden. Die neue Filteranordnung kann damit noch kleinbauender und leichter realisiert werden.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Figur 1: eine perspektivische Ansicht eines Ausführungsbeispiels der neuen Filteranordnung,
- Figur 2: eine vereinfachte Darstellung eines Filtermoduls aus der Filteranordnung aus Figur 1 in entspanntem Zustand,
- Figur 3: das Filtermodul aus Figur 2 im gespannten (verdrehten) Zustand,
- Figur 4: drei Filtermodule der Filteranordnung aus Figur 1 in einer parallelen Anordnung,
- Figur 5: die drei Filtermodule aus Figur 4, wobei eines durch Rückspülen gereinigt wird, und
- Figur 6: eine perspektivische Darstellung der wesentlichen Bestandteile eines neuen Filtermoduls.

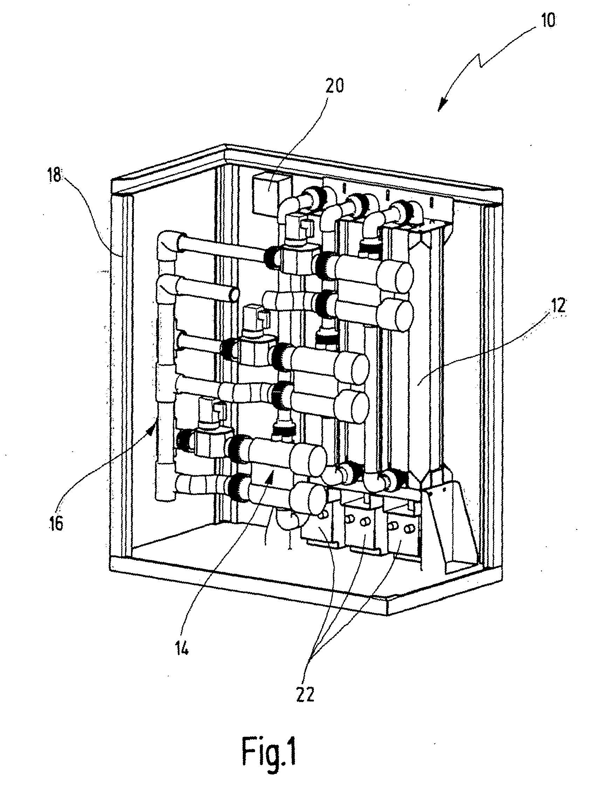

In Figur 1 ist ein Ausführungsbeispiel der neuen Filteranordnung in seiner Gesamtheit mit der Bezugsziffer 10 bezeichnet.

Die Filteranordnung 10 beinhaltet hier drei Filtermodule 12 (aus Gründen der Übersichtlichkeit ist hier nur eines mit der Bezugsziffer 12 bezeichnet) sowie eine Ventilanordnung 14 und ein Rohrleitungssystem 16. Die Ventilanordnung 14 verbindet die Filtermodule 12 mit dem Rohrleitungssystem 16, so dass Schmutzwasser und Filtrat in der nachfolgend beschriebenen Art und Weise zu den Filtermodulen 12 hingeführt bzw. von diesen weggeführt werden können.

Bei der Bezugsziffer 20 ist eine Steuereinheit 20 bezeichnet, die unter anderem die Ventile der Ventilanordnung 14 sowie Drehantriebe 22 steuert. Die Drehantriebe 22 dienen in der nachfolgend erläuterten Weise dazu, Filamentfasern (hier nicht dargestellt) in den Filtermodulen zu verdrehen bzw. zu verdrillen, um auf diese Weise ein Filtrationsmedium zu bilden.

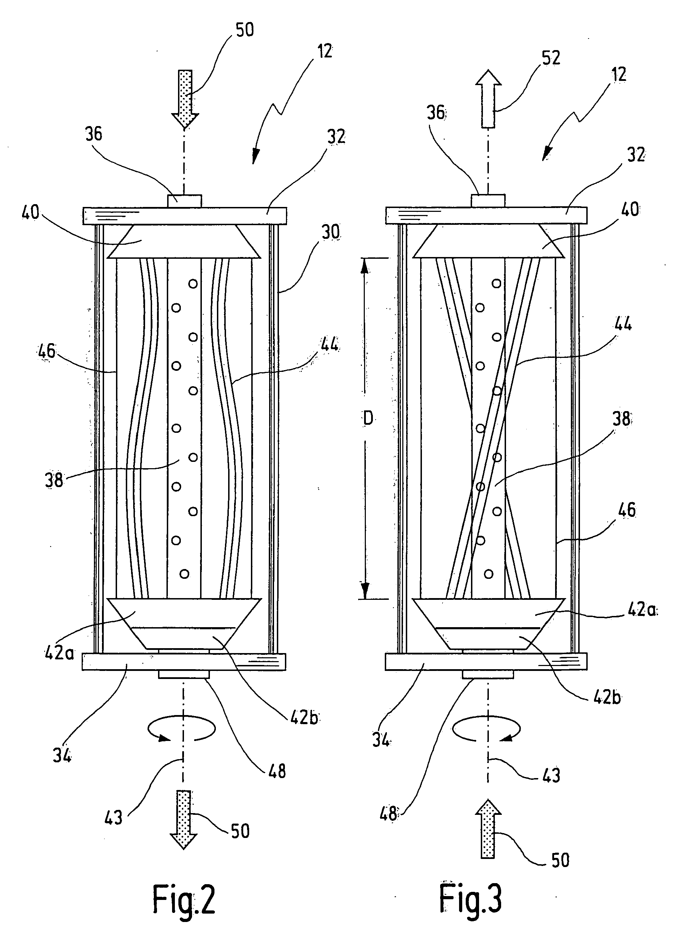

Figuren 2 und 3 zeigen den Aufbau und die Funktionsweise der Filtermodule 12 in einer vereinfachten Darstellung.

Jedes Filtermodul 12 ist hier in einen Rahmen 30 mit einer oberen Platte 32 und einer unteren Platte 34 eingebaut. In der oberen Platte 32 befindet sich ein Auslass 36, der zu einem Innenrohr 38 gehört. Das Innenrohr 38 ist an seiner Mantelfläche mit Löchern versehen, durch die Filtrat in das Innenrohr 38 eintreten und sich dort sammeln kann.

Am oberen und unteren Ende des Innenrohrs 38 ist jeweils ein Halter 40, 42 ortsfest angeordnet. Die Halter 40, 42 sind konstruktiv in einem festen Abstand D zueinander angeordnet (feststehend). Der obere Halter 40 ist in diesem Ausführungsbeispiel starr, der untere Halter 42 ist um eine Längsachse 43 des Innenrohrs 38 drehbar. Er ist hier daher mit einem drehbaren Teil 42a und einem feststehenden Teil 42b dargestellt.

Mit der Bezugsziffer 44 ist eine aus einer Vielzahl von Filamentfasern bezeichnet, die zwischen den beiden Haltern 40, 42 eingespannt sind. In dem bevorzugten Ausführungsbeispiel sind die Filamentfasern 44 an den Haltern 40, 42 unlösbar befestigt. Die Länge der Filamentfasern 44 ist etwa 10% größer als der feste Abstand D, so dass sich die Fasern 44 im entspannten Zustand quer zur Längsachse 43 bewegen können.

Mit der Bezugsziffer 46 ist ein Außenrohr bezeichnet, das die Fasern 44 und das Innenrohr 38 in etwa konzentrisch umgibt. Das Außenrohr 46 bildet zusammen mit den Haltern 40, 42 einen zylindrischen Filterkörper, in den das zu filternde Schmutzwasser über einen Einlass 48 eingeleitet wird. Die Filamentfasern 44 sind so um das Innenrohr 38 herum angeordnet, dass das zu filternde Schmutzwasser das Innenrohr 38 nur erreichen kann, wenn es durch die Filamentfasern 44 hindurchtritt. Dabei wird es gemäß der vorliegenden Erfindung gefiltert, sofern das Filtermodul 12 sich in seinem gespannten Zustand (Figur 3) befindet.

Die Funktionsweise des Filtermoduls 12 ist grundsätzlich wie folgt:
Im Filtrationsbetrieb sind die Filamentfasern 44 durch Verdrehen des Halterteils 42a so gespannt, dass sie sich um das Innenrohr 38 legen. Die Filamentfasern legen sich umso stärker aneinander und gegen das Innenrohr 38, je weiter der bewegliche Teil des Halters 42 gegen den feststehenden Halter 40 verdreht wird.

Aus Gründen der Übersichtlichkeit sind in Figur 3 nur einige Filamentfasern 44 dargestellt. Außerdem sind diese mit einem relativ großen radialen Abstand zu dem Innenrohr 38 dargestellt. In der praktischen Realisierung sind die Abstände jedoch so gewählt, dass sich die Filamentfasern in diagonal verlaufenden Lagen um das Innenrohr 38 herum legen und dadurch ein Fasernetz bilden, das als Filtrationsmedium dient.

Zum Filtern wird Schmutzwasser (dargestellt mit dem Pfeil 50) über den Einlasse 48 in das Filtermodul eingeleitet. Nach dem Durchgang durch die Vielzahl der Filamentfasern sammelt sich das filtrierte Wasser im Innenrohr 38 und kann am Auslass 36 als Filtrat 52 austreten. In einer bevorzugten Anwendung gelangt das Filtrat 52 dann zu einer Umkehrosmoseanlage (hier nicht gezeigt), mit der letztlich Trinkwasser erzeugt wird.

Figur 2 zeigt demgegenüber den entspannten Zustand des Filtermoduls, in dem die Filamentfasern 44 nicht verdreht sind. Dieser Zustand eignet sich, um das Filtermodul 12 zu reinigen. In dem bevorzugten Ausführungsbeispiel erfolgt die Reinigung durch Rückspülen mit unfiltriertem Schmutzwasser 50, das nun allerdings über den "Auslass" 36 in das Filtermodul 12 zugeführt wird. Entsprechend der umgekehrten Stromrichtung tritt das Schmutzwasser 50 mit den Rückständen aus dem Filtermodul 12 dann an dem "Einlass" 48 aus.

Die Reinigung des Filtermoduls 12 durch Rückspülen mit Schmutzwasser hat sich in der Praxis bewährt, da sie einfach und robust ist und trotzdem gute Reinigungsergebnisse bringt. Grundsätzlich wäre es jedoch auch möglich, das Filtermodul 12 im Vorwärtsbetrieb mit Schmutzwasser zu spülen, wenn die Filamentfasern 44 entspannt sind. Beim Rückspülen ist die Reinigungswirkung allerdings noch etwas höher, weshalb diese Richtung bevorzugt ist. Darüber hinaus kann eine Reinigung grundsätzlich natürlich auch mit sauberem Wasser und/oder einem Reinigungsmittel erfolgen.

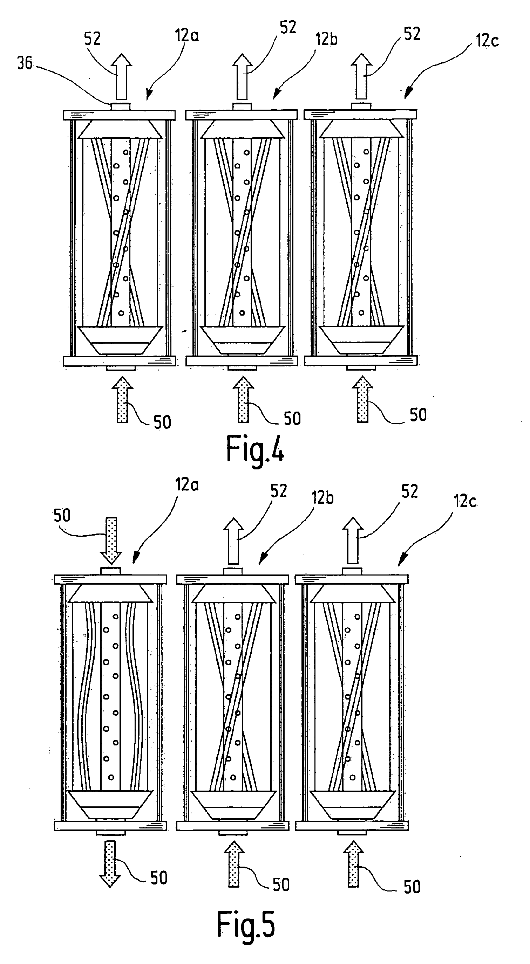

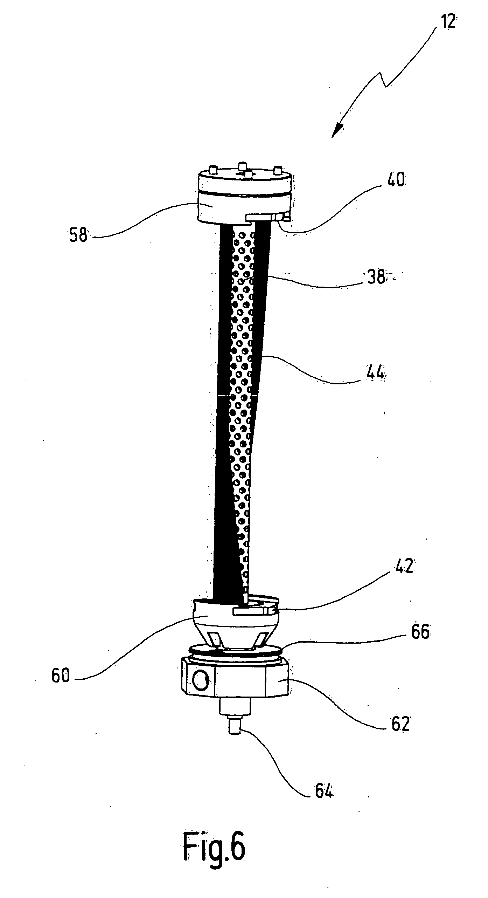

In einem bevorzugten Ausführungsbeispiel erfolgt das Rückspülen automatisch, sobald ein Differenzdruck zwischen dem Einlass 48 und dem Auslass 36 einen einstellbaren Wert übersteigt. Dementsprechend sind in diesem Ausführungsbeispiel geeignete Drucksensoren (hier nicht dargestellt) im Bereich des Einlasses 48 und des Auslasses 36 angeordnet. Diese Drucksensoren liefern ihre Messwerte an die Steuereinheit 20. In einem bevorzugten Ausführungsbeispiel der Erfindung werden nicht alle Filtermodule 12 der Anordnung 10 gleichzeitig gereinigt. Vielmehr erfolgt eine Reinigung aus dem Filtrationsbetrieb (siehe Fig. 4) heraus, indem zunächst nur eines der Module (hier als Modul 12a bezeichnet) entspannt und rückgespült wird, während die beiden anderen Module 12b und 12c weiterhin im Filtrationsbetrieb arbeiten (Fig. 5). Nach einer in der Steuereinheit 20 einstellbaren Zeit wird der Spülvorgang im Modul 12a beendet, das heißt die Steuereinheit 20 schließt die Ventilanordnung 14 in geeigneter Weise. Anschließend werden die Fasern 44 im Modul 12a wieder verdreht und es erfolgt ein Einfiltrieren des gereinigten Moduls 12a, indem der Auslass 36 zur Schmutzwasserquelle hin geöffnet bleibt, das Schmutzwasser selbst jedoch wiederum über den Einlass 48 zugeführt. Nach einer weiteren in der Steuereinheit 20 einstellbaren Zeit wird das vom Modul 12a erzeugte Filtrat dann wieder zum Gesamtfiltratstrom zugeschaltet (Betriebssituation entsprechend Fig. 4). In gleicher Weise erfolgt dann die Rückspülung des nächsten Moduls 12b, 12c, wobei auch in diesen Fällen zunächst die Filamentfasern 44 entspannt werden (hier nicht dargestellt).

Ein bevorzugter Aufbau mit den wesentlichen Bestandteilen des Filtermoduls 12 ist in Fig. 6 gezeigt, in der gleiche Bezugszeichen dieselben Elemente bezeichnen wie zuvor. In dem bevorzugten Ausführungsbeispiel sind die Halter 40, 42 formschlüssig in entsprechende Aufnahmen 58, 60 eingesetzt. Die obere Aufnahme 58 ist in dem bevorzugten Ausführungsbeispiel starr ausgebildet und besitzt eine Durchführung für den Anschluss an das Innenrohr 38. Die untere Aufnahme 60 ist drehbar auf einem Gehäuseteil 62 angeordnet. Der Gehäuseteil 62 ist feststehend und er besitzt eine Durchführung für eine Antriebswelle 64. Bei der Bezugsziffer 66 ist ein Dichtungsring zur Abdichtung des feststehenden Gehäuseteils 62 gegenüber dem hier nicht dargestellten Außenrohr 46 gezeigt. Die Antriebswelle 64 ist mit dem zugehörigen Antrieb 22 (Fig. 1) verbunden.

Zum Austausch des Filtermoduls 12 kann die obere Aufnahme 58 entfernt werden, wodurch der Zugang in das Innere des hier nicht dargestellten Außenrohrs 46 möglich ist. Die untere Aufnahme 60 bleibt hingegen fest mit dem Gehäuseteil 62 bzw. der Antriebswelle 64 verbunden.

In dem bevorzugten Ausführungsbeispiel beinhaltet die Filteranordnung 10 mehrere Sätze von Filtermodulen (hier nicht dargestellt), die Filamentfasern 44 mit unterschiedlichen Eigenschaften aufweisen. Vorzugsweise bestehen die Filamentfasern aus einem Flyergarn aus Polypropylen im Kern sowie einem Mantel aus Polypropylen-Stapelfasern, die in einem Friktionsspinnverfahren auf den Kern aufgebracht sind. Bevorzugt beinhaltet der Satz Filamentfasern unterschiedliche Garntypen, insbesondere dick/flauschig, dünn/flauschig, dick/kompakt und dünn/kompakt. Darüber hinaus können die Fasern chemisch beschichtet sein, um eine höhere Beständigkeit des Filamentmaterials gegen das Schmutzwasser zu erreichen. Darüber hinaus können die einzelnen Fasern eine eigene Drehung (Schutzdrall) haben.

In dem bevorzugten Ausführungsbeispiel arbeitet die Filteranordnung 10 voll automatisch, das heißt die Betriebsarten Filtration, Entspannung der Filamente, Rückspülung, Verdrehung der Filamente, Einfiltrieren und Filtrationsbetrieb werden von der Steuereinheit 20 vollautomatisch gesteuert. Die Rückspülsequenz wird dabei abhängig von dem über das Filtermodul gemessenen Differenzdruck eingeleitet.

## Patentansprüche

1. Filteranordnung zum Filtrieren von Schmutzwasser (50), insbesondere bei der Trinkwasseraufbereitung, mit zumindest einem Filtermodul (12) zum Filtrieren von Schmutzwasser (50), wobei das Filtermodul (12) einen ersten und einen zweiten Halter (40, 42) aufweist, zwischen denen sich ein Innenrohr (38) mit einem Filtratausgang (36) und einer Längsachse (43) erstreckt, wobei zwischen dem ersten und dem zweiten Halter (40, 42) eine Vielzahl von Filamentfasern (44) angeordnet sind, die außerhalb des Innenrohrs (38) verlaufen, und wobei der erste und der zweite Halter (40, 42) gegeneinander um die Längsachse (43) herum verdrehbar sind, **dadurch gekennzeichnet, dass** der erste und der zweite Halter (40, 42) in einem festen Abstand (D) zueinander festgelegt sind, so dass sich die Filamentfasern (44) bei zunehmender Verdrehung zunehmend fester um das Innenrohr (38) legen.

2. Filteranordnung nach Anspruch 1, **dadurch gekennzeichnet, dass** die Vielzahl der Filamentfasern (44) eine Länge aufweisen, die größer ist als der feste Abstand (D).

3. Filteranordnung nach Anspruch 1 oder 2, **dadurch gekennzeichnet, dass** die Filamentfasern mit dem ersten und dem zweiten Halter (40, 42) unlösbar verbunden sind.

4. Filteranordnung nach einem der Ansprüche 1 bis 3, **gekennzeichnet durch** eine erste starre und eine zweite drehbare Aufnahme (58, 60), in die der erste und der zweite Halter (40, 42) lösbar eingesetzt sind.

5. Filteranordnung nach Anspruch 4, **dadurch gekennzeichnet, dass** die erste Aufnahme (58) lösbar in der Filteranordnung befestigt ist, während die zweite Aufnahme (60) fest mit einem Drehantrieb (22) verbunden ist.

6. Filteranordnung nach einem der Ansprüche 1 bis 5, **dadurch gekennzeichnet, dass** die Filamentfasern (44) Aktivkohle beinhalten.

7. Filteranordnung nach einem der Ansprüche 1 bis 6, **gekennzeichnet durch** einen Satz von Filtermodulen (12), die Filamentfasern (44) mit unterschiedlichen Eigenschaften aufweisen.

8. Filteranordnung nach einem der Ansprüche 1 bis 7, **gekennzeichnet durch** eine Ventilanordnung (14), die dazu ausgebildet ist, das Filtermodul (12) mit Schmutzwasser (50) zu durchspülen, und zwar vorzugsweise in umgekehrter Flussrichtung.

9. Filteranordnung nach Anspruch 8, **dadurch gekennzeichnet, dass** die Ventilanordnung (14) dazu ausgebildet ist, das Filtermodul (12) druckluftfrei mit Schmutzwasser (50) zu durchspülen.

10. Filteranordnung nach einem der Ansprüche 1 bis 9, **gekennzeichnet durch** eine Steuereinheit (20), die dazu ausgebildet ist, die relative Verdrehung des ersten und zweiten Halters (40, 42) in Abhängigkeit von einer Spülrichtung und/oder in Abhängigkeit von einer gewünschten Filtrationsqualität einzustellen.

11. Filteranordnung nach einem der Ansprüche 1 bis 10, **gekennzeichnet durch** eine Vielzahl von Filtermodulen (12a, 12b, 12c), die parallel zueinander angeordnet sind und die unabhängig voneinander mit Schmutzwasser (50) durchspülbar sind.

12. Verfahren zum Filtrieren von Schmutzwasser (50), insbesondere bei der Trinkwasseraufbereitung, mit den Schritten:
- Bereitstellen von zumindest einem Filtermodul (12) zum Filtrieren von Schmutzwasser (50), wobei das Filtermodul (12) einen ersten und einen zweiten Halter (40, 42) aufweist, zwischen denen sich ein Innenrohr (38) mit einem Filtratausgang (36) und einer Längsachse (43) erstreckt und zwischen denen eine Vielzahl von Filamentfasern (44) angeordnet sind, die außerhalb des Innenrohrs (38) verlaufen, und
- Verdrehen des ersten und zweiten Halters (40, 42) gegeneinander um die Längsachse (43) herum,
**dadurch gekennzeichnet, dass** der erste und der zweite Halter (40, 42) in einem festen Abstand (D) zueinander eingespannt werden, so dass sich die Filamentfasern (44) bei zunehmender Verdrehung zunehmend fester um das Innenrohr (38) legen.

13. Verfahren nach Anspruch 12, **dadurch gekennzeichnet, dass** der erste und zweite Halter (40, 42) um einen Drehwinkel gegeneinander verdreht werden, der in Anhängigkeit von einer gewünschten Filtrationsqualität eingestellt wird.

14. Verfahren nach Anspruch 12 oder 13, **dadurch gekennzeichnet, dass** eine Vielzahl von Filtermodulen (12a, 12b, 12c) parallel zueinander bereitgestellt werden, wobei die Vielzahl der Filtermodule (12a, 12b, 12c) zur Reinigung zeitlich versetzt zueinander durchspült werden.

15. Verfahren nach einem der Ansprüche 12 bis 14, **dadurch gekennzeichnet, dass** das zumindest eine Filtermodul (12) zum Reinigen entdreht und mit Schmutzwasser (50) gespült wird, und zwar insbesondere druckluftfrei.

16. Filtermodul für eine Filteranordnung nach einem der Ansprüche 1 bis 11, mit einem ersten und einem zweiten Halter (40, 42), zwischen denen sich ein Innenrohr (38) mit einem Filtratausgang (36) und einer Längsachse (43) erstreckt, wobei zwischen dem ersten und dem zweiten Halter (40, 42) eine Vielzahl von Filamentfasern (44) angeordnet sind, die außerhalb des Innenrohrs (38) verlaufen, und wobei der erste und der zweite Halter (40, 42) gegeneinander um die Längsachse (43) herum verdrehbar sind, **dadurch gekennzeichnet, dass** der erste und der zweite Halter (40, 42) in einem festen Abstand (D) zueinander festgelegt sind, so dass sich die Filamentfasern (44) bei zunehmender Verdrehung zunehmend fester um das Innenrohr (38) legen.
